# EUROPEAN PATENT APPLICATION

(11) **EP 1 296 271 A2**
(43) Date of publication of application: **26.03.2003**
(21) Application number: 02256568.3
(22) Date of filing: 20.09.2002
(51) Int. Cl.: G06F 17/60

(54) **Method and apparatus for fulfilling and updating an electronic contract**

(30) Priority: 21.09.2001 GB 0122875
(71) Applicant: Hewlett-Packard Company, Palo Alto, California 94304-1112 (US)
(72) Inventor: Salle, Mathias Jean Rene, Palo Alto, CA 94306 (US)
(74) Representative: Lawrence, Richard Anthony

(57) **Abstract**

The invention concerns a method and apparatus arranged for fulfilling and updating an electronic contract. The apparatus comprises a portable device 20 and a contract repository 10. The contract repository 10 houses a repository of available contracts from which the portable device 20 is arranged to receive and load contract details of selected contracts having contract clauses which require that a physical act (such as delivery) be carried out in order to fulfil. The relevant contract details are loaded onto device 20 from the repository 10 and the device 20 taken to the physical location at which a particular clause is to be fulfilled. Interaction between parties to the contract is supported by the portable device 20 and physical transactions documented by upload of information to the contract repository 10.

## Description

The invention relates to electronic contracts and particularly to a method and apparatus for the fulfilment of such contracts.

More and more business is being conducted in an on-line environment in which digital information passes between parties. Sometimes such e-business simply does not have any "real world" consequence in that there is no physical transaction that takes place. However, often the digital transactions do have a physical consequence, for instance, books may be ordered and paid for over the internet and are later physically sent through the post to the recipient.

The e-service world inherits problems of both digital and real worlds. When companies do business in the digital world, most of the trades are goods in the real world. This means that most of the enactment of the business relationships described in the digital world will, in fact, be done in the real world. There is a need for a system that will relate back to the digital world the actions that have been taken in the real world. To accomplish this a link between the real world actions and the digital world is required.

According to a first aspect of the invention, there is provided a method of fulfilling and updating an electronic contract comprising: storing details of electronic contracts in a contract repository in a format in which individual contract terms are susceptible of automatic inspection to determine their state of fulfilment; automatically inspecting the repository to inspect the state of fulfilment of individual contract terms of contracts stored therein; if it is detected that at least one contract in the repository has one or more unfulfilled contract terms outstanding which require a physical transaction to complete, then loading details of said at least one contract in electronic form into a portable device; interacting with the portable device to document physical transactions relating to the one or more unfulfilled contract terms; and uploading information relating to the documented transactions to the contract repository.

A second aspect of the invention comprises a method of fulfilling and updating an electronic contract comprising the steps of: storing details of an electronic contract in a contract repository in a format in which individual contract terms are susceptible of automatic inspection to determine their state of fulfilment; automatically inspecting the repository to inspect the state of fulfilment of individual contract terms of the contract stored therein; and where it is detected that the contract requires one or more physical transactions to be completed, then loading details of said contract in electronic form into a portable device, taking the portable device to a location at which one or more of the physical transactions may be completed and interacting with the portable device to document performance of such physical transactions; and uploading information relating to the documented transactions to the contract repository to automatically update the state of said contract.

According to a third aspect of the invention, there is provided an apparatus for fulfilling and updating an electronic contract comprising a portable device and a contract repository wherein: the contract repository comprises a database in which contracts are stored in an automatically inspectable format to enable the automatic inspection of the state of fulfilment of individual contract terms of contracts stored therein; and the portable device is arranged, following detection by the contract repository that one or more contract terms of a contract held on the repository require a physical transaction to be undertaken for fulfilment, to receive and load details of said contract having one or more unfulfilled contract terms in an electronic format from the contract repository, and to support interaction between parties to the contract to document the physical transactions relating to the one or more unfulfilled contract terms and to upload information relating to the documented transactions to the contract repository.

A fourth aspect of the invention provides apparatus for fulfilling and updating an electronic contract comprising a portable device and a contract repository wherein: the contract repository comprises: a database in which contracts are stored in an automatically inspectable format to enable the automatic inspection of the state of fulfilment of individual contract terms of contracts stored therein; an interface for interfacing with the portable device; and a further input interface by means of which details of contracts may be entered into the database; and the portable device comprises: a controller; a memory; recognition means; and communication means, wherein following detection by the contract repository that one or more contract terms of a contract held in the database require a physical transaction to be undertaken for fulfilment, the communication means of the portable device is arranged to receive from the contract repository details of a contract having one or more unfulfilled contract terms and to load said contract into said memory, the portable device being arranged to support interaction between parties to the contract under control of the controller and to document in the memory performance of the physical transactions relating to the one or more unfulfilled contract terms and to upload information relating to the documented transactions to the contract repository via the communication means.

The contracts stored in the contract repository may store the details of electronic contracts that have been established between parties by any means. For instance, such contracts may have been established by negotiation between the parties via the internet and input to the contract repository via an appropriate input interface.

Preferably, the contract repository stores details of contracts in a format in which individual contract terms may be inspected automatically to determine their state of fulfilment.

Preferably, where inspection of a contract reveals that the contract contains one or more unfulfilled terms that require fulfilment by means of a physical action by one of the parties to the contract, details of that contract are loaded into the portable device from the contract repository.

The contract repository may comprise a database in which many contracts are stored for download.

The contract repository preferably further comprises an interface for interfacing with the portable device to enable both the transfer of contract details to the portable device from the database and the uploading of information from the portable device to the database.

The contract repository may be a server that is maintained by a commercial entity and on which details of contracts specifically relating to transactions involving that commercial entity are stored.

The portable device preferably is provided with recognition means to enable the identification of one or more parties with which it is arranged to interact.

The portable device may be a personalised device in which the identity of one party is pre-stored.

The recognition means may comprise a reader for recognising the identity of a party based on data carried on a personal identifier. For instance, the reader may be a card reader and the personal identifier may be a smart card.

The device itself may have its own identity (private key, shared secret) used to authenticate itself with the contract repository.

Following fulfilment of one or more contractual terms, the portable device is preferably arranged to send details notifying such fulfilment to the contract repository.

The step of interacting with the portable device may comprise taking the portable device to a location at which one or more of the physical transactions may be completed and interacting with the portable device to document performance of such physical transactions.

The step of uploading information relating to the documented transactions to the contract repository may further comprise automatically updating the state of said contract.

For a better understanding of the invention and to illustrate how to bring embodiments into effect, a particular embodiment will now be described, by way of example only, with reference to the accompanying drawing, in which:
Figure 1 illustrates schematically a first embodiment of the invention comprising a contract repository 10 and a portable user device 20;and
Figure 2 is a flow diagram illustrating a basic embodiment of a method in accordance with the present invention.

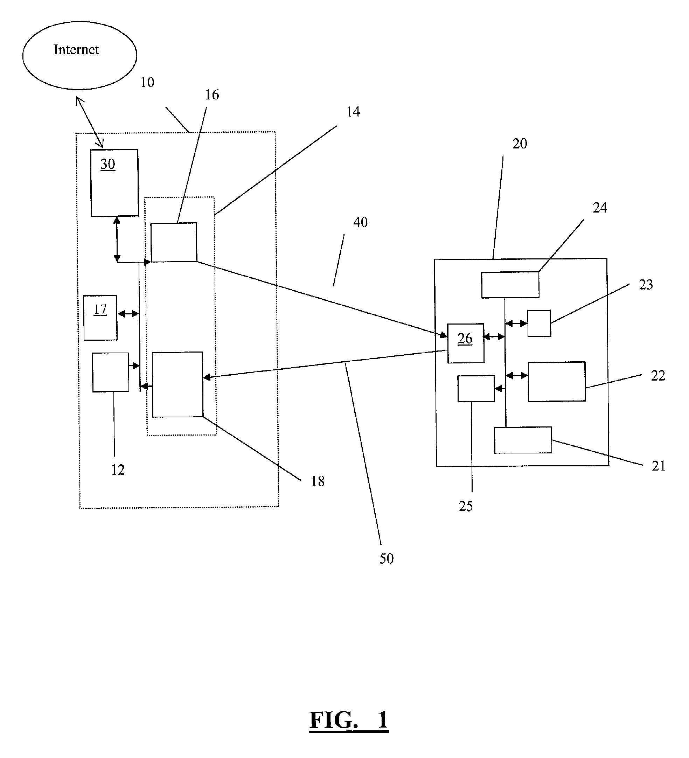

Referring now to Figure 1, there is shown an electronic contract fulfilment apparatus in accordance with an embodiment of the present invention.

The apparatus of Figure 1 comprises a contract repository 10 and a portable device 20.

The contract repository 10 comprises a database 12 upon which details of many different pre-established contracts are stored, an interface 14 for interfacing with the portable device 20, means for inspecting 17,and an input interface 30.

The interface 14 comprises a connection server 16 and a notification server 18 that respectively access contract details from and update contract details in the database 12.

The input interface 30 represents a convenient means by which details of contracts negotiated between parties may be input to the database 12 via email, the internet or any other convenient medium.

The means for inspecting 17 comprises a microcontroller for controller operations of the contract repository and facilitating access to the database 12 and inspection of contracts held in it.

The portable device 20 may be a portable computing device such as a PDA and includes recognition means such as an identification card interface 21, a controller 22, a memory 23, a keypad 24, a display 25 and communication means 26 linked by an internal bus. The portable device 20 carries out the ordinary functions of a PDA in a conventional manner and is further arranged for communication with the connection server 16 and notification server 18 by communication means 26 via communications paths 40 and 50 respectively.

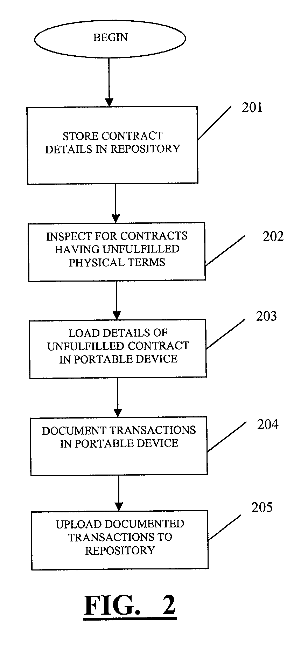

Use of the apparatus of Figure 1 will now be described with reference also to Figure 2. Here, an example is discussed in which an agreement to purchase a computer system is to be made.

A buyer desiring to purchase a commodity (e.g. a computer system, book or other item) from a seller and wishing to enter into a formalised purchase contract in a first step establishes a contractual relationship with the seller and details of that relationship such as contract terms and information relevant to the contracting parties and their obligations etc. are entered into the database 12 by means of the input interface 30 (STEP 201). In a simple example, the buyer may have placed an order for a desired commodity with the seller via an internet website of the seller.

Typically, the contract repository 10 is maintained by a commercial entity which is one of the parties to the contract in question - in this example the repository is maintained by the seller.

Details of such a contract "C" stored in the repository may include the clauses:
*Clause 1: Buyer is obliged to pay seller $600 on 12*/*09*/*01*.
*Clause 2: On completion of clause 1, seller is obliged to deliver computer to buyer*.

The database is periodically inspected by connection server 16 and considering the above contract example will find that the contract in question has not been completed as Clause 1 is not fulfilled.

Fulfilment of Clause 1 may at some stage take place and such fulfilment is likely to take place electronically (i.e. non-physically) and automatically via electronic payment received from input interface 30 or by any other convenient means.

Once such payment has been effected and clause 1 marked as fulfilled, any subsequent inspection of contract C (in STEP 202) by the connection server 16 will reveal to the seller that the fulfillment of the previous clause now means that there is a clause (Clause 2) that it is obliged to fulfil by means of a physical transaction. As the action of delivery must take place in a physical manner, the inspection of the contract here triggers the communication of contract details of C by the connection server 16 to the portable device 20 (STEP 203) using an agreed standard format that is compatible with the requirements of easy viewing and fulfilment of contractual terms.

In use, an employee of the seller responsible for delivery is provided with the portable device 20 and receives the details of unfulfilled contract C on that device as part of the delivery process. The portable device 20 allows the employee to check his delivery schedule and gives him the delivery address.

At the buyers address the employee and the buyer interact with the portable device 20 to fulfill the necessary contract clause(s) (STEP 204). This interaction in this example may comprise the employee taking details of the buyer either manually or in an automated fashion such as by the entering of an ID card to the Identification Card interface 21 and cross-referencing the ID details with those in the contract document. Here, this interaction further comprises both the salesman and the buyer viewing the contract details on the display 25 of the portable device 20 and ensuring that such details are correct.

The portable device 20 may include the possibility for receiving a signature acknowledging receipt of delivery and, as such, the portable device 20 includes software to support signature. As this procedure is a critical step, confirmation of identity is asked for and must be given.

In the preferred embodiment once receipt of delivery has been acknowledged and documented by the portable device (thus completing STEP 204), then a connection to notification server 18 is established via communication path 50 and the portable device 20 reports back to the notification server 18 by uploading (in STEP 205) the information relating to the documented transactions with details of the now fulfilled contract clause or clauses. The notification server 18 then verifies the authenticity of the information and updates the contract repository in the database 12 with the latest state of the contract C.

The contract process is not over until all the contract clauses by which the parties have bound themselves have been fulfilled. Some contract clauses may have been complied with at the time of making the contract. For instance, one party may have paid an equipment deposit and using the personal ID card, the other party may mark this as an obligation fulfilled and record of that fulfilment at the time of signing is passed to the notification server where it is marked as a fulfilled contractual obligation.

In embodiments of the invention, wherever the connection server 16 detects that a term of the contract requires some physical completion of an action to progress (i.e. the contract terms which require only non-physical [electronic] completion have been completed), then necessary details for completion of that action are downloaded to device 20. The user of the portable device 20 will take the portable device 20 to the required location at which the physical act is to occur and upon completion of that act enter confirmation of this fact. For instance, if the user is to take delivery of one or more pieces of equipment, acknowledgement of receipt may be demanded by the supplier and entered on the portable device 20 and subsequently uploaded to the notification server 18.

In the manner explained above, it will be appreciated that as each obligation of a contract is physically (or indeed, non-physically) fulfilled, it can automatically be marked as such and that the state of the contract is at all times kept up to date at the database 12 by the notification server 18.

Further, where obligations can be fulfilled in a non-physical way (e.g. by sending an electronic signature) such obligations may - if supported by adequate identification authority - be directly communicated to the copy of the contract held at the database 12 by means of the input interface 30 to be detected during the next periodic inspection of the repository of the database 12.

The skilled reader will appreciate that the invention as described herein provides the advantages of bridging the gap that hitherto has existed between actions which are taken in the real world and those taken in the digital world to provide a convenient means of contract entry, modification and fulfilment.

Whilst an identification card reader has been given as the example of the recognition means, it will be appreciated that any element capable of performing the function of user recognition may be substituted therefore. Other examples of such recognition means comprise, but are not limited to: smart card readers, ID chip readers, keypads for the entry of personal codes, or readers capable of recognising individuals based on unique human characteristics (such as finger prints, DNA, voice patterns etc.).

It will also be realised by the skilled reader that the portable device 20 comprises other elements which are not illustrated, but which are implicit, such as a communications interface (e.g. modem), power supply etc..

Whilst in the description the use of only one portable device has been disclosed, it might be the case that multiple such devices are used, for instance, one for each contracting party. As an example of such use, people at a goods reception point could use such a device to signal that goods have been received and that they now consider that the provider obligation to deliver is fulfilled.

Where multiple devices are used to work on the same contract C, it will be appreciated that it is necessary to provide a means by which changes made by one portable device 20 can be consistently notified to the other devices. This may be assured in a number of ways. For instance, when a change is made by one portable device 20 a connection to notification server 18 is established via communication path 50 and the portable device 20 reports back in the normal way to the notification server 18 with details of the now fulfilled contract clause or clauses. The notification server 18 then verifies the authenticity of the information and updates the database 12 with the latest state of the contract C. Following this checking step the connection server 16 can then broadcast the current state of the contract C to all those devices holding a copy of it. In another example, each portable device may be enabled to transmit contract information directly to each other portable device using a suitable protocol.

Where multiple devices are used to work on the same contract, changes made by one portable device 20 can be consistently notified to the other by devices corresponding to a supplier and a customer using any transmission medium such as infrared to communicate their updates to the contract C and agree to the execution of a contractual clause.

It will also be appreciated that various modifications to the invention are within the scope of the present application and that such scope is limited only by the appended claims.

## Claims

1. A method of fulfilling and updating an electronic contract comprising:
storing details of electronic contracts in a contract repository (10) in a format in which individual contract terms are susceptible of automatic inspection to determine their state of fulfilment;
automatically inspecting the repository (10) to inspect the state of fulfilment of individual contract terms of contracts stored therein;
if it is detected that at least one contract in the repository (10) has one or more unfulfilled contract terms outstanding which require a physical transaction to complete, then loading details of said at least one contract in electronic form into a portable device (20);
interacting with the portable device (20) to document physical transactions relating to the one or more unfulfilled contract terms; and
uploading information relating to the documented transactions to the contract repository (10).

2. The method of claim 1, wherein the contract repository (10) stores the details of electronic contracts that have been established between parties.

3. The method of claim 2, wherein such contracts have been established and are input to the contract repository (10) via an appropriate input interface (30).

4. The method of claim 1, 2 or 3, wherein in said step of automatically inspecting the repository (10) to inspect the state of fulfilment of individual contract terms of contracts stored therein, the repository (10) undergoes periodic inspection.

5. The method of claim 1, 2, 3 or 4, wherein in said step of automatically inspecting the repository (10) to inspect the state of fulfilment of individual contract terms of contracts stored therein, any newly fulfilled obligations which have been fulfilled in a non-physical way subsequent to a previous inspection are detected.

6. The method of any preceding claim 1, wherein the step of interacting with the portable device (20) comprises the step of documenting the fulfilment of one or more contract clauses.

7. The method of claim 6, wherein verifiable user identification is entered to the portable device (20) by at least one of the parties to the contract during the documenting step to acknowledge fulfilment of the relevant contract clause or clauses.

8. The method of any preceding claim, wherein the step of uploading information comprises sending details notifying the completion of a contractual clause to the contract repository.

9. The method of claim 8, wherein upon receiving uploaded information from the portable device (20), the contract repository (10) is arranged to verify such information and upon verification to update contract details within the repository.

10. The method of any preceding claim, wherein the step of interacting with the portable device comprises taking the portable device to a location at which one or more of the physical transactions may be completed and interacting with the portable device to document performance of such physical transactions.

11. The method of any preceding claim, wherein the step of uploading information relating to the documented transactions to the contract repository further comprises automatically updating the state of said contract.

12. The method of any preceding claim, wherein loading contract details to the portable device is only undertaken once it is detected that all contract terms within the contract that are capable of prior non-physical fulfilment have been fulfilled.

13. Apparatus for fulfilling and updating an electronic contract comprising a portable device (20) and a contract repository (10) wherein:
the contract repository (10) comprises: a database (12) in which contracts are stored in an automatically inspectable format to enable the automatic inspection of the state of fulfilment of individual contract terms of contracts stored therein; an interface (14) for interfacing with the portable device (20); and a further input interface (30) by means of which details of contracts may be entered into the database (12); and
the portable device (20) comprises: a controller (22); a memory (23); recognition means (21); and communication means (26), wherein following detection by the contract repository (10) that one or more contract terms of a contract held in the database (12) require a physical transaction to be undertaken for fulfilment, the communication means (26) of the portable device (20) is arranged to receive from the contract repository (10) details of a contract having one or more unfulfilled contract terms and to load said contract into said memory (23), the portable device (20) being arranged to support interaction between parties to the contract under control of the controller (22) and to document in the memory (23) performance of the physical transactions relating to the one or more unfulfilled contract terms and to upload information relating to the documented transactions to the contract repository (10) via the communication means (26).

14. The apparatus of claim 13, wherein the interface (14) of the contract repository is arranged to enable both the transfer of contract details to the portable device (20) from the database (12) and the uploading of information from the communication means (26) of the portable device (20) to the database (12).

15. The apparatus of claim 13 or 14, wherein the contract repository (10) comprises a server that is maintained by a commercial entity and on which details of contracts specifically relating to transactions involving that commercial entity are stored.

16. The apparatus of claim 13, 14 or 15, wherein the recognition means (21) enables the identification of one or more parties with which the portable device (20) is arranged to interact.

17. The apparatus of any of claims 13 to 16, wherein the recognition means (26) comprise a reader for recognising the identity of a party based on data carried on a personal identifier.

18. The apparatus of any of claims 13 to 17, wherein the contract repository (10) includes means for inspecting (17) for inspecting the state of contracts stored therein.

19. The apparatus of claim 18, wherein when inspection of a contract by the means for inspecting (17) reveals that the contract has one or more terms that require fulfilment at a physical location, the details of such contract are automatically loaded by the interface (14) into the portable device (20).

20. The apparatus of any of claims 13 to 19, wherein upon physical fulfilment of a contractual clause, the portable device (20) is arranged to send details notifying such fulfilment to the contract repository (10).

21. The apparatus of claim 20, wherein upon notification of fulfilment of a contractual clause, verification of such notification is carried out and recordal of that fulfilment is made.

22. The apparatus of any of claims 13 to 21, wherein the interface (14) comprises a connection server (14) and a notification server (18),that respectively access contract details from and update contract details in the database.
